# EUROPEAN PATENT SPECIFICATION

(11) **EP 3 362 834 B1**
(45) Date of publication and mention of the grant of the patent: **18.09.2019**
(21) Application number: 16876973.5
(22) Date of filing: 14.10.2016
(51) Int. Cl.: G02B 6/44

(54) **OPTICAL FIBERS AND CABLES FOR HIGH TEMPERATURE APPLICATIONS**
OPTISCHE FASERN UND KABEL FÜR HOCHTEMPERATURANWENDUNGEN
FIBRES ET CÂBLES OPTIQUES POUR APPLICATIONS HAUTE TEMPÉRATURE

(30) Priority: 16.10.2015 US 201562242341 P
(43) Date of publication of application: 22.08.2018
(73) Proprietor: AFL Telecommunications LLC, Duncan, SC 29334 (US)
(72) Inventor: MIYAMOTO, Matsuhiro, Duncan, South Carolina 29334 (US); JACOBSEN, William Paul, Duncan, South Carolina 29334 (US); D'URSO, John J., Duncan, South Carolina 29334 (US); BOLTE, David A., Duncan, SC 29334 (US)
(74) Representative: Gray, James
(86) International application number: PCT/US2016/057085
(87) International publication number: WO 2017/123298

(56) References cited:
- US-A1- 2008 273 852
- US-A1- 2010 027 949

## Description

### FIELD OF THE INVENTION

The present disclosure relates to optical fiber cables. More particularly, the present disclosure relates to optical fiber cables adapted for use in high temperature applications, and techniques for manufacturing same.

### BACKGROUND OF THE INVENTION

Optical fiber cable composed of one or more fibers in a metallic tube (such as a stainless steel tube) is popular for certain applications. For example, optical ground wire cable (also known as "OPGW") typically includes, among the cable components, a stainless steel tube containing a plurality of optical fibers. In addition, cables intended for use in harsh environmental application, such as downhole cable for oil and gas fields and fire resistant cable, also often have a stainless steel tube containing one or more optical fibers. In most stainless steel tube cable, a gel is used as a filling compound inside the tube to inhibit water intrusion and to reduce fiber movement along the tube due to gravity, vibration, thermal expansion, etc.

For high temperature applications (higher than about 300°C), the use of gel is problematic because the gel may decompose into gas at the high temperature. Consequently, metal tube cable for high temperature application at temperatures higher than 300°C often does not include gel. Moreover, the fibers themselves are typically coated with metal rather than a polymer, because the polymer would not meet the temperature requirements.

As the temperature increases, the absence of gel creates additional problems. For example, sustained high temperatures (e.g., a range of 500°C-600°C) can result in inter- diffusion of metals in a stainless tube cable with metal coated fibers inside (with no gel). As a result, the metal-coated fiber may stick to the stainless tube wall where they are in contact. In the case of multiple fibers in the tube, the fibers may also stick to each other where they are in contact. This fusing phenomenon causes damage on the metal surface of the fibers, as well as loss increase and fiber breakage.

When metal-coated optical fiber is exposed at high temperature in air or oxygen, most metals (except for gold or noble metals) become oxidized. As a result, the metal will be brittle and have a tendency to peel off. So, tube cable is filled with inert gas and sealed at the ends. The atmosphere is thus kept inert during the service life of the cable. However, when the temperature of the sealed tube increases, it becomes difficult to seal at both ends because of the high pressure of gas.

Accordingly, improved optical fibers and cables would be desired. The present disclosure recognizes the foregoing considerations, and others, of the prior art Publications US 2008/273852 A1 and US 2010/027949 A1 disclose optical fibers of particular interest.

### BRIEF DESCRIPTION OF THE INVENTION

Aspects and advantages of the invention will be set forth in part in the following description, or may be obvious from the description, or may be learned through practice of the invention.

In accordance with one aspect, the present disclosure provides a metal-coated optical fiber comprising an optical fiber including a core and a cladding. A metal coating surrounds the cladding and extends along substantially the entire axial length of the optical fiber. A powder material is coated on an outer surface of the metal coating, the powder material being capable of withstanding temperatures of at least about 300°C without substantial degradation. For example, the powder material may comprise at least one of graphite powder and/or silica powder, or powders of other suitable materials as discussed herein.

Another aspect of the present disclosure provides an optical fiber cable comprising a metallic tube and at least one optical fiber contained in the metallic tube. A powder material is coated on at least one of an outer surface of the optical fiber and an inner surface of the metallic tube. For example, the powder material may be coated on both the outer surface of the optical fiber and the inner surface of the metallic tube. Preferably, the powder material will be capable of withstanding temperatures of at least about 300°C without substantial degradation. According to exemplary embodiments, the powder material may comprise at least one of graphite powder and/or silica powder, or powders of other suitable materials as discussed herein.

The tube is, in some embodiments, sealed at one end and is evacuated at one end to keep a vacuum inside the tube. Opening of the tube is hermetically sealed at both ends. No oxidation occurs at high temperature. Alternatively, no such sealing and vacuum is required.

In accordance with another aspect, an optical fiber is provided. The optical fiber comprises a core and a cladding, and a metal coating surrounding the cladding, the metal coating extending along the entire axial length of the optical fiber. The optical fiber further includes a powder coated on an outer surface of the metal coating, wherein the powder is one of a mineral, a ceramic, or a carbon.

In some exemplary embodiments, the powder does not degrade at a temperature of at least 300 °C.

In accordance with another aspect, an optical fiber cable is provided. The optical fiber cable includes a metallic tube, and at least one metal-coated optical fiber disposed within the metallic tube. The optical fiber cable further includes a powder coated on at least one of an outer surface of the at least one metal-coated optical fiber or an inner surface of the metallic tube, wherein the powder is one of a mineral, a ceramic, or a carbon.

In some exemplary embodiments, the powder does not degrade at a temperature of at least 300 °C.

In some embodiments, the tube is evacuated such that a vacuum exists within the tube. Alternatively, no such evacuation is required.

These and other features, aspects and advantages of the present invention will become better understood with reference to the following description and appended claims. The accompanying drawings that form part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Figure 1 is a diagrammatic representation of a prior art optical fiber cable showing multiple fibers inside a stainless steel tube with gel as a filling compound.
Figure 2 is a diagrammatic representation of a prior art optical fiber cable showing multiple fibers inside a stainless steel tube with no gel filling compound.
Figure 3 is a perspective diagrammatic view of a metal-coated optical fiber with layers cut away.
Figure 4 is a diagrammatic representation of an optical fiber cable showing multiple fibers inside a stainless steel tube in accordance with an embodiment of the present disclosure.
Figure 5 is a perspective diagrammatic view of a metal-coated optical fiber with layers cut away in accordance with an embodiment of the present disclosure.
Figure 6 diagrammatically illustrates one method of powder application.

Repeat use of reference characters in the present specification and drawings is intended to represent same or analogous features or elements of the invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as claimed. For instance, features illustrated or described as part of one embodiment can be used with another embodiment to yield a still further embodiment. Thus, it is intended that the present invention covers such modifications and variations as come within the scope of the appended claims and their equivalents.

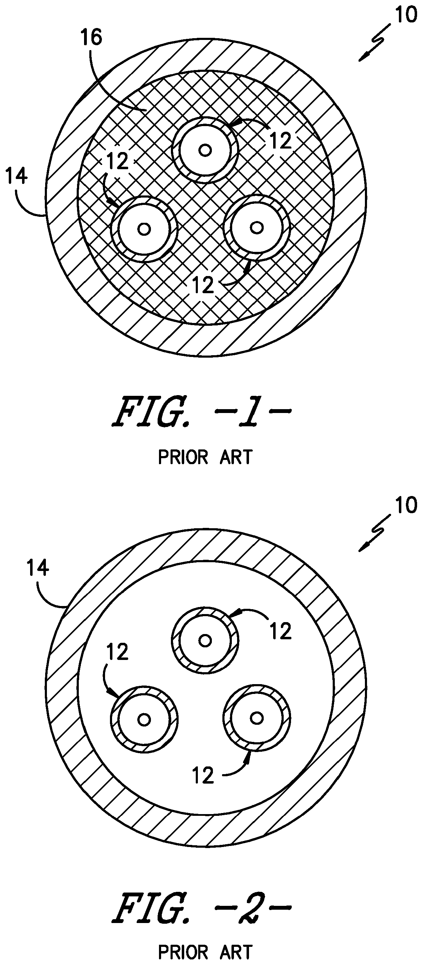

Figures 1 and 2 show an exemplary optical fiber cable 10 of the prior art having a plurality of metal-coated optical fibers 12 contained in a stainless steel tube 14. In Figure 1, the remaining space inside of tube 14 (i.e., the space not occupied by the fibers 12 themselves) is filled with a gel 16. In Figure 2, no gel is present, as might be the case if the cable 10 is intended for use in high temperature applications.

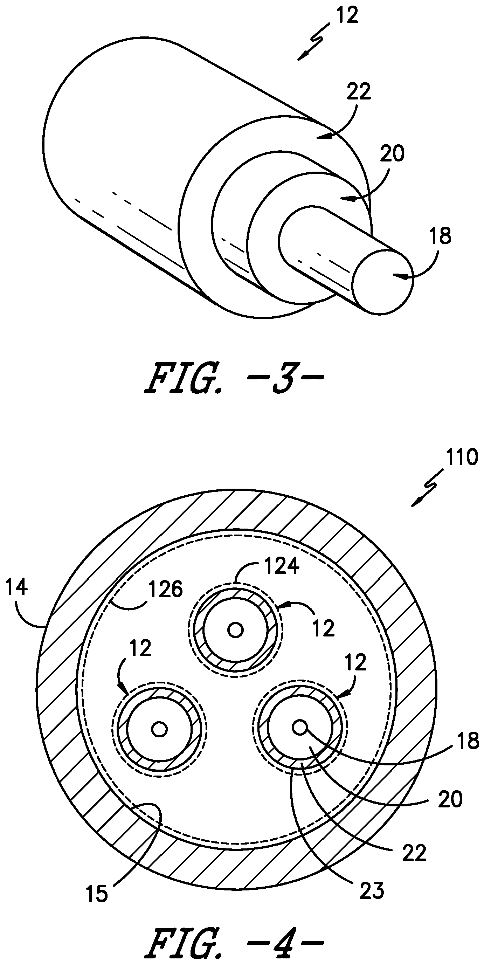

Referring now to Figure 3, additional details regarding metal-coated optical fiber 12 will be described. As can be seen, fiber 12 includes a glass (i.e. silica) fiber having a core 18 and a cladding 20. A metal coating 22 surrounds and contains the cladding/core combination. (In some cases, a carbon or other suitable layer may be disposed between the cladding outer layer and the metal coating, while in other cases the metal coating directly contacts the cladding.) The metal coating 22 may extend along the entire axial length of the fiber 12.

As noted above, it has been found that inter-diffusion occurs at interface points or other areas where metals are in contact with each other at high temperature (e.g., more than 300°C). In order to avoid such inter-diffusion, embodiments of the present disclosure utilize a suitable powder coating on the metal surfaces that would otherwise contact each other. The material chosen for the coating should be stable against the high temperatures to which it will be exposed. For example, some embodiments of the present disclosure utilize graphite powder. Because graphite powder is made of carbon, there is no generation of oxygen and water by thermal decomposition. Another option is to use silica particles, which are stable at high temperature up to and including 2000°C.

Other powders are also suitable for insulation as long as impurities such as hydrogen do not come out at high temperature. Such impurities will degrade the atmosphere in the tube and thus shorten the useful life of the fibers and stainless steel tube. Accordingly, in exemplary embodiments powders in accordance with the present disclosure do not degrade at temperatures of at least 300°C. The powder, e.g., graphite powder, silica powder, or another suitable powder, can be applied to metal-coated fiber using powder applicator.

Examples of suitable powders include suitable minerals, ceramics, and carbons, i.e. various forms of carbon (either naturally or synthetically produced). Examples of suitable minerals include silicates, oxides, carbonates, and phosphates. Examples of suitable mineral silicates include sodium silicate, calcium silicate, magnesium silicate, magnesium trisilicate, sodium aluminosilicate, potassium aluminum silicate, calcium aluminosilicate, aluminum silicate, mica, and clay minerals such as talc. Examples of suitable mineral oxides include alumina and silicon dioxide. Examples of suitable mineral carbonates include sodium carbonate, sodium bicarbonate, and calcium carbonate. Specific sulfates include gypsum.

Figure 4 illustrates a fiber optic cable 110 in accordance with an embodiment of the present disclosure. Cable 110 includes a plurality of optical fibers 12 contained in a tube 14 of stainless steel or another suitable metal. In this case, cable 110 is intended for use in high temperature applications and does not have a filling compound (gel) in its interior space. As can be seen, however, a powder coating 124 (shown by dashed line) is located on the outer surface 23 of each optical fiber 12. Similarly, a powder coating 126 is located on the inner surface 15 of tube 14. Notably, the powder coating 124 can be provided on the outer surfaces 23 of the optical fibers 12 only (and not the inner surface 15 of the tube 14), or the inner surface 15 of the tube 14 (and not the outer surfaces 23 of the optical fibers 12), or both the outer surfaces 23 of the optical fibers 12 and the inner surface 15 of the tube 14. In some cases, for example, the interior of the tube 14 around the optical fiber(s) may be filled with the powder (i.e. in place of a gel). As noted above, the powder coating may be formed of a suitable material such as graphite and/or silica and/or other suitable material as discussed herein in order to insulate the metal surfaces from each other and thus inhibit metal inter-diffusion that might occur at high temperatures, such as greater than 300°C , which affects attenuation of the tubed optical fiber.

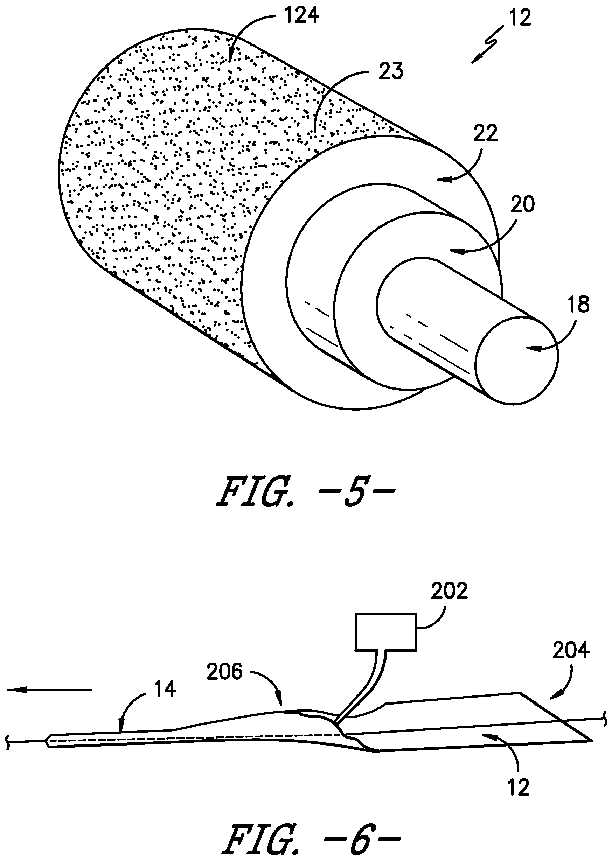

A detailed view of optical fiber 12 is shown in Figure 5. Like optical fiber 12, an optical fiber (i.e. glass fiber) having a core 18 and a cladding 20 is provided. A metal coating 22 surrounds and contains the cladding/core combination (and carbon layer, if present). Metal coating 22 may be of any suitable metal, such as nickel, copper, gold, silver, aluminum, ruthenium, rhodium, platinum, or suitable alloys thereof. In some embodiments, the metal coating 22 may include multiple layers of the metal(s) and/or alloys thereof. In addition, the outer surface 23 of coating 22 includes a coating 124 of suitable powder deposited thereon and thus coating the coating 22. The powder is represented in Figure 5 by stippling on the outer surface 23 of coating 22.

As noted above, the powder coating may be applied by a suitable powder applicator. For example, the powder is sprayed, blown with air flow, with electrostatic force, by vibration, etc. onto optical fibers which go through an enclosure filled with powder. As will be appreciated, the powder particles may not completely cover the entire outer surfaces but may nevertheless be effective so long as enough of the surface is covered. In the tubing process, fibers are inserted just before welding. As shown in Figure 6, powder can be carried onto a tube or fiber through a small tube with electrostatic force, gas flow, vibration, and so on. More specifically, and as shown, powder can be flowed through a powder feeder 202 and deposited on the outer surface of an optical fiber 12 (i.e. the outer surface 23 of the metal coating 22 thereof) and/or the inner surface 15 of a tube 14. The powder may be released from the feeder 202 just prior to a tape 204 of metallic material being welded together to form the tube 14, such as at a welding point 206.

Prototypes of an embodiment of the present disclosure were made and tested as follows:

### Experiment 1 -- Heat Treatment of Metal-coated Fiber in Stainless Steel Canister

Coiled metal coated fibers were placed into a stainless steel canister in order to keep them under inert gas atmosphere. The stainless steel canister had two openings for inlet of fiber and inert gas. Nitrogen was connected with an inlet of canister. Then, the canister was put into a furnace for 500°C, 5hr of heat treatment. After heat treatment, it was difficult to uncoil the metal-coated fiber into straight because the coiled fiber was bonded together at some contact points in the coil. The appearance of the coiled fiber indicated oxidation because color was changed from shiny to dark and SEM image of its surface indicated scaling of surface metal. Oxidation can be suppressed by complete exchange air atmosphere with inert gas. Even pure inert atmosphere does not avoid metal inter-diffusion at points of metal contact.

Next, graphite powder was coated on metal-coated fiber by putting coiled fiber in a package of graphite powder. Then, the metal-coated fiber was placed into a stainless steel canister. Heat treatment at 500°C for 5hr was conducted as before. After heat treatment, the appearance of the metal-coated fiber looked shiny. And it was easy to uncoil fibers into straight because of no bonding together or coiling. SEM images of the metal-coated fiber indicated less oxidation. The graphite powder was still black.

### Experiment 2 -- Heat Cycle Test of Tubed Metal-coated Fiber

Two tubed cables with metal coated fiber were made. One was metal-coated fiber without powder in a tube and the other was metal-coated fiber with graphite powder in a tube. The graphite was coated during a rewinding process. The tube size was 3.2mm in outer diameter and 2.8mm in inner diameter. The metal-coated fiber was single mode copper coated fiber with 10 micron of thickness. EFL (excess fiber length) of fiber against tube was about 0.3%.

The loss after tubing was different in the two fibers. The loss of tubed metal- coated fiber with graphite was 1.5 dB/km @ 1.3/µm and 1.7 dB/km @ 1.55/µm and the loss of tubed fiber without graphite powder was 2.5 dB/km @ 1.3/µm and 3 dB/km @ 1.55/µm. The lower loss was achieved by graphite powder coating.

The two tubed cables were put into a furnace for heat cycle test. An end of the tube cables was taken out the furnace and the fiber was connected to jumper for an optical time-domain reflectometer (OTDR) and the gap between fiber and tube was sealed by adhesive. The other tube end was connected to nitrogen gas cylinder for gas purge. So, the metal-coated fiber was controlled under almost nitrogen atmosphere. Then, three cycles of heating from room temperature to 500°C was given to the two tubed cables. After heating, the loss was measured by OTDR. The loss of tubed cable with graphite was increased to 3 dB/km @ 1.3/µm and 3.5 dB/km @ 1.55µm after heat cycle. But the loss of tubed fiber without graphite was increased to be more than 15 dB/km at both wavelengths after heat cycle. So, the powder coating exhibited a dramatic improvement after heating compared to the cable without powder coating.

It can thus be seen that the present disclosure provides a novel optical fiber cable that provides benefits in comparison with the prior art. Namely:
(1) Suitable powder coating on metal surface prevents inter-diffusion between metal-coated fibers and between metal-coated fiber and metal tube where both metals are physically in contact. During high temperature exposure, the loss increase or fiber breakage that might otherwise occur due to fusion is avoided.
(2) Some suitable materials for the powder coating do not cause gas generation such as hydrogen. Also, the particles do not damage surface of optical fiber. Moreover, a small quantity of powder works well for insulation. So introduction of powder does not change cabling parameter such as dimension, production speed and tubing process.
(3) The powder can serve as a lubricant when surface friction increases due to oxidation. (The outer surface of metal becomes rough at high temperature due to oxidation when atmosphere is not controlled to be inert gas inside tube. This causes transmission loss increase.)
(4) The powder can work as an oxygen getter at high temperature. Thus, oxidation is avoided by introduction of powder. Metal-coated fiber needs inert gas atmosphere inside tube at high temperature to avoid oxidation, which would degrade mechanical strength. Intrusion of small fraction of oxygen into tube is consumed by the powder instead of oxidizing the metal.

This written description uses examples to disclose the invention, including the best mode, and also to enable any person skilled in the art to practice the invention, including making and using any devices or systems and performing any incorporated methods. The scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal phrasing of the claims.

## Claims

1. Optical fiber (12) comprising a core (18) and a cladding (20); a metal coating (22) surrounding the cladding, the metal coating extending along the entire axial length of the optical fiber; and **characterized in that** a powder (24) is coated on an outer surface of the metal coating, the powder being one of a mineral, a ceramic, or a carbon.

2. The optical fiber of claim 1, wherein the powder is a mineral, a mineral silicate, a mineral oxide, or a mineral carbonate.

3. The optical fiber of claim 1, wherein the powder is magnesium silicate.

4. The optical fiber of claim 1, wherein the powder does not degrade at a temperature of at least 300 °C.

5. The optical fiber of claim 1, wherein the metal is one of nickel, copper, gold, silver, aluminum, ruthenium, rhodium, platinum, or an alloy thereof.

6. An optical fiber cable (110) comprising:
a metallic tube (14);
at least one metal-coated optical fiber (12) disposed within the metallic tube; and **characterized in that** a powder (124) is coated on an outer surface of the at least one metal-coated optical fiber, the powder being one of a mineral, a ceramic, or a carbon.

7. The optical fiber cable of claim 6, wherein the metallic tube is a stainless steel tube.

8. The optical fiber cable of claim 6, wherein the tube is evacuated such that a vacuum exists within the tube.

9. The optical fiber cable of claim 6, wherein the powder is coated only on the outer surface of the at least one metal-coated optical fiber.

10. The optical fiber cable of claim 6, wherein the powder is coated on both the outer surface of the at least one metal-coated optical fiber and the inner surface of the metallic tube.

11. The optical fiber cable of claim 6, wherein the powder is a mineral, a mineral silicate, a mineral oxide, or a mineral carbonate.

12. The optical fiber cable of claim 6, wherein the powder is magnesium silicate.

13. The optical fiber cable of claim 6, wherein the powder does not degrade at a temperature of at least 300 °C.

14. The optical fiber cable of claim 6, wherein the metal is one of nickel, copper, gold, silver, aluminum, ruthenium, rhodium, platinum, or an alloy thereof.

## Patentansprüche

1. Optische Faser (12) mit einem Kern (18) und einem Mantel (20),
- einer den Mantel umgebenden Metallbeschichtung (22), wobei die Metallbeschichtung sich über die gesamte axiale Länge der optischen Faser erstreckt,
und **gekennzeichnet dadurch, dass**
- auf eine Außenfläche der Metallbeschichtung ein Pulver (24) aufgetragen ist, wobei das Pulver ein Mineral, eine Keramik oder ein Kohlenstoff ist.

2. Optische Faser nach Anspruch 1, wobei das Pulver ein Mineral, ein Silikatmineral, ein Oxidmineral oder ein Karbonatmineral ist.

3. Optische Faser nach Anspruch 1, wobei das Pulver Magnesiumsilikat ist.

4. Optische Faser nach Anspruch 1, wobei das Pulver bei einer Temperatur von mindestens 300 °C nicht abgebaut wird.

5. Optische Faser nach Anspruch 1, wobei das Metall Nickel, Kupfer, Gold, Silber, Aluminium, Ruthenium, Rhodium, Platin oder eine Legierung aus diesen ist.

6. Optisches Faserkabel (110), umfassend:
- ein Metallrohr (14),
- mindestens eine im Metallrohr angeordnete metallbeschichtete optische Faser (12),
- **dadurch gekennzeichnet, dass** auf die Außenfläche der mindestens einen metallbeschichteten optischen Faser ein Pulver (124) aufgetragen ist, wobei das Pulver Mineral, Keramik oder Kohlenstoff ist.

7. Optisches Faserkabel nach Anspruch 6, wobei das Metallrohr ein Edelstahlrohr ist.

8. Optisches Faserkabel nach Anspruch 6, wobei das Metallrohr evakuiert ist, sodass im Rohr ein Vakuum besteht.

9. Optisches Faserkabel nach Anspruch 6, wobei das Pulver nur auf der Außenfläche der mindestens einen metallbeschichteten optischen Faser aufgetragen ist.

10. Optisches Faserkabel nach Anspruch 6, wobei das Pulver sowohl auf die Außenfläche der mindestens einen metallbeschichteten optischen Faser als auch auf die Innenfläche des Metallrohrs aufgetragen ist.

11. Optisches Faserkabel nach Anspruch 6, wobei das Pulver ein Mineral, ein Silikatmineral, ein Oxidmineral oder ein Karbonatmineral ist.

12. Optisches Faserkabel nach Anspruch 6, wobei das Pulver Magnesiumsilikat ist.

13. Optisches Faserkabel nach Anspruch 6, wobei das Pulver bei einer Temperatur von mindestens 300 °C nicht abgebaut wird.

14. Optisches Faserkabel nach Anspruch 6, wobei das Metall Nickel, Kupfer, Gold, Silber, Aluminium, Ruthenium, Rhodium, Platin oder eine Legierung aus diesen ist.

## Revendications

1. Fibre optique (12) comprenant une arme (18) et un revêtement (20) ; Une gaine métallique (22) entourant le revêtement, la gaine métallique s'étendant sur toute la longueur axiale de la fibre optique et **caractérisée en ce qu'**
une poudre (24) est appliquée comme revêtement sur la surface extérieure de la gaine métallique,
la poudre étant une poudre minérale, une poudre céramique ou une poudre de carbone.

2. Fibre optique selon la revendication 1,
selon laquelle
la poudre est une poudre minérale, un silicate minéral, un oxyde minéral ou un carbonate minéral.

3. Fibre optique selon la revendication 1,
selon laquelle
la poudre est du silicate de magnésium.

4. Fibre optique selon la revendication 1,
selon laquelle
la poudre ne se dégrade pas en dessous d'une température d'au moins 300°C.

5. Fibre optique selon la revendication 1,
selon laquelle
le métal est l'un des métaux suivants : nickel, cuivre, or, argent, aluminium ruthénium, rhodium, platine ou des alliages de ces métaux.

6. Câble à fibres optiques (110) comprenant :
un tube métallique (14),
au moins une fibre optique (12) revêtue de métal et logée dans le tube métallique,
câble **caractérisé en ce qu'**
une poudre (124) est appliquée comme revêtement sur la surface extérieure d'au moins une fibre optique à gaine métallique,
la poudre est une poudre d'un minéral, une poudre de céramique ou une poudre de carbone.

7. Câble à fibres optiques selon la revendication 1,
selon lequel
le tube métallique est un tube en acier inoxydable.

8. Fibre optique selon la revendication 6,
selon laquelle
le tube est mis sous vide de façon qu'il existe le vide dans le tube.

9. Fibre optique selon la revendication 6,
selon laquelle
la poudre est appliquée comme revêtement seulement sur la surface extérieure d'au moins une fibre optique à gaine métallique.

10. Fibre optique selon la revendication 6,
selon laquelle
la poudre est un revêtement à la fois sur la surface extérieure d'au moins une fibre optique à gaine métallique et sur la surface intérieure du tube métallique.

11. Fibre optique selon la revendication 6,
selon laquelle
la poudre est un minéral, un silicate minéral, un oxyde minéral ou un carbonate minéral.

12. Fibre optique selon la revendication 1,
selon laquelle
la poudre est du silicate de magnésium.

13. Fibre optique selon la revendication 6,
selon laquelle
la poudre ne se dégrade pas en dessous d'une température d'au moins 300°C.

14. Fibre optique selon la revendication 1,
selon laquelle
le métal est l'un des métaux suivants : nickel, cuivre, or, argent, aluminium, ruthénium, rhodium, platine ou un alliage de ces métaux.
